# EUROPÄISCHE PATENTSCHRIFT

(11) **EP 1 076 809 B1**
(45) Veröffentlichungstag und Bekanntmachung des Hinweises auf die Patenterteilung: **07.11.2001**
(21) Anmeldenummer: 99922175.7
(22) Anmeldetag: 05.05.1999
(51) Int. Cl.: G01D 5/245, G01B 7/30, G01D 5/14

(54) **MULTITURN-CODEDREHGEBER**
MULTITURN ROTARY ENCODER
CODEUR DE ROTATION MULTITOUR

(30) Priorität: 06.05.1998 DE 19820014
(43) Veröffentlichungstag der Anmeldung: 21.02.2001
(73) Patentinhaber: Dr. Johannes Heidenhain GmbH, 83292 Traunreut (DE)
(72) Erfinder: BIELSKI, Steffen, D-84518 Garching (DE); FEICHTINGER, Kurt, D-83349 Palling (DE); SPIES, Alfons, D-83358 Seebruck (DE); STRASSER, Erich, D-83308 Trostberg (DE); MITTERREITER, Johann, D-83339 Chieming (DE); MEYER, Hermann, D-83458 Weissbach (DE); SCHROTER, Andreas, D-83278 Traunstein (DE)
(86) Internationale Anmeldenummer: EP9903056
(87) Internationale Veröffentlichungsnummer: WO9957522

(56) Entgegenhaltungen:
- DE-A- 4 440 214
- DE-C- 4 220 502
- GB-A- 2 176 616
- "INKREMENTAL UND ABSOLUT" ELEKTROTECHNIK, Bd. 70, Nr. 22, 16. Dezember 1988 (1988-12-16), Seite 38, 42 XP000110970 Würzberg, W-Germany ISSN: 1431-9578

## Beschreibung

In vielen Fällen ist es erforderlich, die Position einer Welle innerhalb einer Umdrehung sowie die Anzahl der Umdrehungen absolut zu erfassen. Zu diesem Zweck werden Multiturn-Codedrehgeber eingesetzt, wie beispielsweise in der EP 0 715 151 B1 und der DE 42 20 502 C1 beschrieben.

Der Multiturn-Codedrehgeber gemäß der EP 0 715 151 B1 ist im HEIDENHAIN-Firmenprospekt: Code-Drehgeber, April 1997 auf Seite 9 beschrieben. Zur Erfassung und Unterscheidung einer Vielzahl von Umdrehungen einer Welle sind mehrere Codescheiben über ein Getriebe miteinander verbunden. Jede Codescheibe besteht aus mehreren Codespuren mit abwechselnd angeordneten Nord- und Südpolen. Die Codespuren sind unterschiedlich geteilt, so besitzt die gröbste jeweils nur einen Nord- und Südpol, die nächstfeinere Spur jeweils zwei Nord- und Südpole und die feinste Spur jeweils acht Nord- und Südpole. Die Codespuren werden von Hall-Sensoren abgetastet. Durch Kombination der Abtastsignale aller Hall-Sensoren wird ein absolutes mehrstelliges Codewort gebildet, das die absolute Winkelstellung der Codescheibe angibt.

Ein ähnlicher Multiturn-Codedrehgeber ist in der Zeitschrift Elektronik, Bd. 70 (1988), 16. Dez., no. 22, Seiten 38 und 42 beschrieben.

Nachteilig bei diesen Multiturn-Codedrehgebern ist, daß eine Codescheibe mit mehreren Codespuren verwendet werden muß, um ein mehrstelliges Codewort zu erzeugen.

Bei dem Multiturn-Codedrehgeber gemäß der DE 42 20 502 C1 sind ebenfalls mehrere Codescheiben jeweils über ein Untersetzungsgetriebe miteinander verbunden. Jede Codescheibe besteht aus einer Magnettrommel mit einem einzigen Nord- und Südpol. Am Umfang der Magnettrommel sind zwei um 90° gegeneinander versetzt angeordnete Hall-Sensoren vorgesehen. Das Magnetfeld der Magnettrommel, welches die Hall-Sensoren durchdringt ist radial ausgerichtet. Bei einer Umdrehung der Magnettrommel wird ein analoges sin- und cos-Signal erzeugt. Die analogen sin- und cos-Signale aller Codescheiben werden einer Auswerteeinheit zugeführt, welche das mehrstellige Codewort bildet, das wiederum die absolute Winkelstellung der Codescheibe über mehrere Umdrehungen anzeigt.

Nachteilig dabei ist, daß die Hall-Sensoren einzeln auf einer Platine montiert werden müssen.

In der DE 44 40 214 A1 ist ein Drehgeber mit Hallsensoren beschrieben, bei dem die Hallsensoren zur Abtastung einer Magnetscheibe einschließlich der Auswerteschaltung zur Bildung eines Winkelwertes in einem gemeinsamen IC integriert sind. Eine Messung über mehrere Umdrehungen ist nicht angegeben.

Ein inkrementaler Drehgeber zur Erzeugung von Zählimpulsen durch Abtastung einer Teilung mittels Hallelementen ist in der GB 2 176 616 A offenbart.

Der Erfindung liegt die Aufgabe zugrunde, einen Multiturn-Codedrehgeber zu schaffen, der einfach aufgebaut ist und kostengünstig herstellbar ist.

Diese Aufgabe wird von einer Anordnung mit den Merkmalen des Patentanspruches 1 gelöst.

Die Vorteile der Erfindung bestehen darin, daß alle Sensorelemente zur Abtastung eines oder mehrerer Codeträger in einem Chip integriert sind und somit hochgenau zueinander ausgerichtet sind und gleiche Charakteristiken aufweisen.

Vorteilhafte Ausführungen sind in den abhängigen Patentansprüchen angegeben.

Ausführungsbeispiele der Erfindung sind in den Figuren dargestellt. Es zeigen
- Figur 1: das Prinzip eines Multitum-Codedrehgebers,
- Figur 2: ein erstes Beispiel eines drehbaren Codeträgers mit einer Abtasteinrichtung,
- Figur 3: ein zweites Beispiel eines drehbaren Codeträgers mit einer Abtasteinrichtung,
- Figur 4: ein drittes Beispiel eines drehbaren Codeträgers mit einer Abtasteinrichtung,
- Figur 5: ein viertes Beispiel eines drehbaren Codeträgers mit einer Abtasteinrichtung,
- Figur 6: eine gemeinsame Abtasteinrichtung für mehrere Codeträger,
- Figur 7: einen Codeträger, der relativ zu einer Abtasteinrichtung verdrehbar sowie verschiebbar ist und
- Figur 8: den Codeträger gemäß Figur 7 in einer weiteren Position.

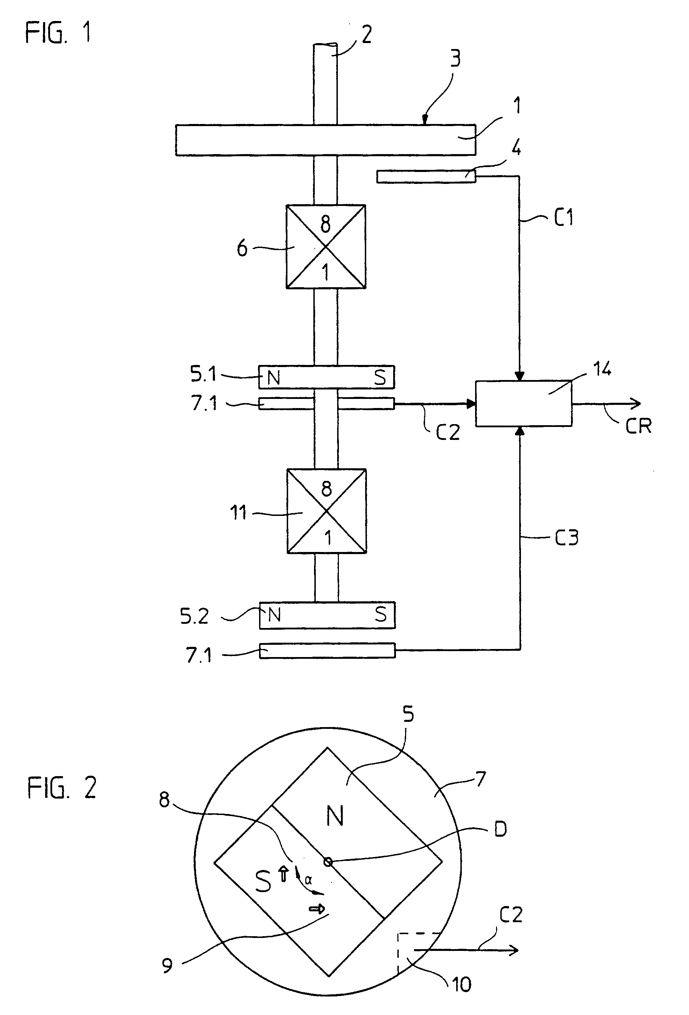

In Figur 1 ist das Prinzip eines Multiturn-Codedrehgebers dargestellt. Er besteht aus einem Singleturn-Teil und einen Multiturn-Teil. Der Singleturn-Teil wird von einer Codescheibe 1 gebildet, die direkt mit der zu messenden Eingangswelle 2 gekoppelt ist. Die Codescheibe 1 trägt eine lichtelektrisch, magnetisch, kapazitiv oder induktiv abtastbare Codierung 3, um eine Umdrehung der Eingangswelle 2 in eine Vielzahl von unterscheidbaren Sektoren aufzuteilen. Diese Codierung 3 ist in der Regel ein mehrspuriger Gray-Code, sie kann aber auch durch einen einspurigen Kettencode gebildet werden. Die Codierung 3 wird von einer Abtasteinrichtung 4 abgetastet, so daß am Ausgang des Singleturn-Teils ein mehrstelliges Codewort C1 ansteht, das die Absolutposition der Eingangswelle 2 innerhalb einer einzigen Umdrehung angibt.

Zur Erfassung der Umdrehungszahlen der Eingangswelle 2 ist der Multiturn-Teil vorgesehen. Er besteht aus zumindest einem Codeträger 5.1, welcher über ein Untersetzungsgetriebe 6 mit der Eingangswelle 2 gekoppelt ist. Im dargestellten Beispiel ist eine 8-fache Untersetzung gewählt.

Wie in Figur 1 dargestellt, ist es besonders vorteilhaft, wenn dem Codeträger 5.1 ein oder mehrere weitere Untersetzungsgetriebe 11 nachgeschaltet ist/sind, mit dem ein oder mehrere weitere Codeträger 5.2 untersetzt angetrieben wird/werden. Besonders vorteilhaft ist es, wenn alle Codeträger 5 des Multiturn-Teils gleichartig gestaltet sind. Dadurch können auch die korrespondierenden Abtasteinrichtungen 7.1, 7.2 gleichartig ausgebildet sein, was die Lagerhaltung vereinfacht und den Einkaufspreis erheblich reduziert.

Jeder Codeträger 5 weist einen einzigen Dipol, also einen Nord- und einen Südpol auf. Die Pole eines Codeträgers 5 werden von einer Abtasteinrichtung 7 abgetastet. Sie ist ein Halbleitersubstrat, in dem mehrere magnetfeldempfindliche Sensorelemente 8, 9 integriert sind. Dieses Halbleitersubstrat 7 ist in Figur 2 vergrößert dargestellt. Im einfachsten Beispiel sind zwei Sensorelemente 8, 9 als Hall-Sensoren integriert. Die empfindlichen Sensorflächen stehen im Beispiel senkrecht zur Substratoberfläche und sind gegenseitig um einen Winkel α verdreht angeordnet. Die Hall-Sensoren 8, 9 sind beispielsweise in der durch den Doppelpfeil gezeichneten Richtung maximal empfindlich, für Magnetfelder parallel zu ihrer gezeichneten längeren Seite dagegen unempfindlich. Dadurch, daß der Magnet 5 um die Drehachse D gedreht wird, wird ein sich drehendes Magnetfeld erzeugt, dessen Feldlinien im Bereich der Hall-Sensoren 8, 9 parallel zur Substratoberfläche liegen, aber ihre Richtung in dieser Fläche drehwinkelabhängig verändern. Jeder der Hall-Sensoren 8, 9 liefert somit pro Umdrehung des Magneten 5 ein analoges sinusförmiges Abtastsignal. Wenn der Winkel α=90° beträgt, sind die Abtastsignale um 90° gegeneinander phasenverschoben und es lassen sich daraus durch bekannte Interpolationsverfahren eine Vielzahl von absoluten Positionen innerhalb einer Umdrehung des Magneten 5 unterscheiden. Die hierzu erforderliche Auswerteschaltung 10 ist ebenfalls im Substrat 7 integriert. Die Auswerteschaltung 10 verknüpft die analogen Abtastsignale der Hall-Sensoren 8, 9 derart, daß am Ausgang parallel mehrere digitale Signale unterschiedlicher Perioden anstehen, die beispielsweise einen Gray-Code bilden oder daß am Ausgang bereits direkt ein mehrstelliges digitales Codewort C2 seriell ansteht.

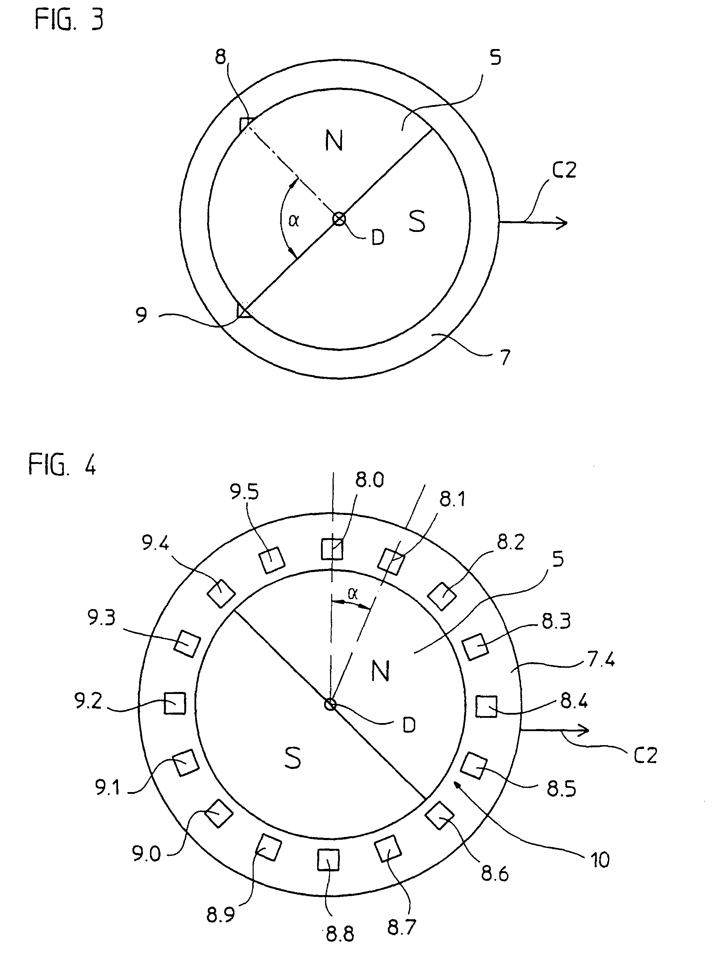

Die Anordnung der Hall-Sensoren 8, 9 kann aber auch gemäß Figur 3 gewählt werden. Die empfindliche Fläche der-Hall-Sensoren 8, 9 liegt parallel zur Oberfläche des Substrats 7 und das wirksame Magnetfeld des Magneten 5 seht senkrecht auf der Substratoberfläche. Diese Anordnung hat den Vorteil, daß die Hall-Sensoren 8, 9 am äußersten Umfang des Substrats 7 angeordnet werden können, woraus eine hohe Winkelauflösung resultiert. Der Raum im Zentrum des Substrats 7 kann für die Auswerteschaltung 10 optimal genutzt werden.

Die jeweils in den einzelnen Abtasteinrichtungen 4, 7.1, 7.2 gebildeten mehrstelligen Codewörter C1, C2, C3 oder die jeweils gebildeten digitalen Signale unterschiedlicher Perioden werden einer Kombinationslogik 14 zugeführt, welche daraus ein resultierendes mehrstelliges Codewort CR bildet und an eine Folgeelektronik weitergibt.

Anstelle von nur zwei Sensorelementen 8, 9 kann auch in vorteilhafter Weise eine Vielzahl von Sensorelementen 8.0 bis 9.5 im Halbleitersubstrat 7 integriert sein, die jeweils einen Winkel α kleiner als 90° zueinander einschließen. Ein Beispiel hierzu ist in Figur 4 dargestellt. Das Halbleitersubstrat ist hier mit 7.4 bezeichnet und die Sensorelemente in Form von Hall-Sensoren mit 8.0 bis 9.5. Der Codeträger 5 ist wiederum als Dipol mit einem einzigen Nord- und Südpol ausgebildet. Zum Ausgleich von Exzentrizitäten bei der Drehung des Codeträgers 5 um die Drehachse D sind die Sensorelemente 8.0 bis 9.5 symmetrisch zur Drehachse D angeordnet. Jedes der Sensorelemente 80 bis 95 liefert pro Umdrehung des Magneten 5 ein analoges sinusförmiges Abtastsignal mit einer Periode.

Die zwei zur Interpolation erforderlichen um 90° gegeneinander phasenverschobenen Abtastsignale werden durch Kombination der Abtastsignale der Sensorelemente 8.0 bis 9.5 gewonnen, indem jeweils die Abtastsignale räumlich gegenüberliegender Sensorelemente 8.0 bis 9.5 voneinander subtrahiert werden.

Im Beispiel gemäß Figur 4 bedeutet dies, daß die analogen Abtastsignale innerhalb eines ersten Sektors von 180° liegenden Sensorelemente 8.0 bis 8.7 zu einem ersten Summensignal addiert werden und die analogen Abtastsignale der dazu gegenüberliegenden Sensorelemente 8.8 bis 9.5 zu einem zweiten Summensignal addiert werden. Beide Summensignale werden in Differenz geschaltet, wobei am Ausgang der Differenzschaltung das resultierende 0°-Signal ansteht.

Das um 90° dazu phasenverschobene resultierende Abtastsignal wird in gleicher Weise durch Summation von Abtastsignalen innerhalb eines zweiten Sektors von 180° liegenden Sensorelemente 8.4 bis 9.1 erzeugt, indem die analogen Abtastsignale der Sensorelemente 8.4 bis 9.1 zu einem dritten Summensignal addiert werden und die analogen Abtastsignale der gegenüberliegenden Sensorelemente 9.2 bis 8.3 zu einem vierten Summensignal addiert werden. Beide Summensignale werden in Differenz geschaltet, wobei am Ausgang der Differenzschaltung das resulierende 90°-Signal ansteht. Der zweite Sektor ist gegenüber dem ersten Sektor räumlich um 90° versetzt.

Die so erzeugten um 90° gegeneinander phasenverschobenen Abtastsignale haben wiederum eine Periode pro Umdrehung des Magneten 5, wobei durch die Kombination von Abtastsignalen Oberwellen und Exzentrizitätsfehler weitgehend kompensiert sind. Durch Interpolation dieser beiden Abtastsignale ist somit eine besonders genaue absolute Positionsbestimmung innerhalb einer Umdrehung des Magneten 5.4 möglich.

In bekannter Weise kann die Interpolation durch ein Widerstandsnetzwerk, durch arctan-Berechnung oder durch Tabellenauswertung erfolgen. Die Interpolationseinheit ordnet jeder Amplitudenkombination der beiden resultierenden analogen Abtastsignale eine eindeutige absolute Position innerhalb einer Periode zu. So kann beispielsweise eine 2⁵ = 32-fache Unterteilung erfolgen

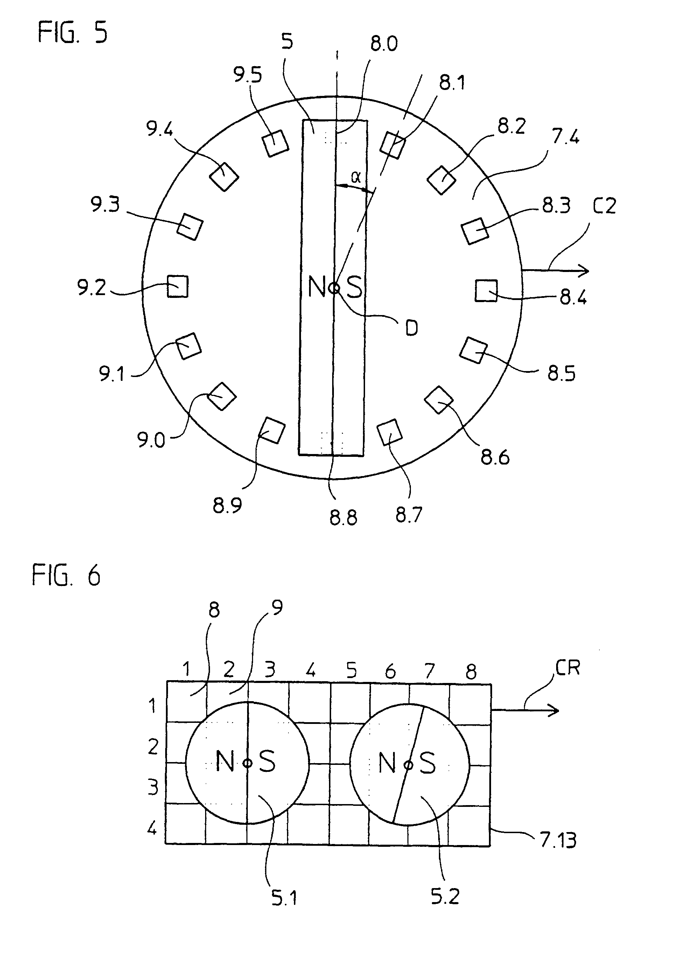

Wesentlich für die Erfindung ist, daß die zur beschriebenen Auswertung und Erzeugung eines mehrstelligen Codewortes C2, C3 erforderlichen Schaltungselemente im Substrat 7.4 integriert sind. Diese Auswerteschaltung ist in Figur 4 und 5 mit dem Bezugszeichen 10 versehen.

Beim Beispiel gemäß Figur 4 ist der Magnet 5 ein scheiben- oder trommelförmiger Körper. Die Hall-Sensoren 8.0 bis 9.5 sind am Außenumfang räumlich verteilt angeordnet, so daß ihre empfindlichen Flächen parallel zur Oberfläche des Substrats 7.4 ausgerichtet sind und sie von einem Magnetfeld des Magneten 5 beeinflußt werden, das senkrecht zur Substratoberfläche ausgerichtet ist. Der Einfluß des Magnetfeldes auf die einzelnen Sensorelemente 8.0 bis 9.5 ist abhängig von der augenblicklichen Drehstellung des Magneten 5. Die in der Substratoberfläche - welche beispielsweise von den Sensorelementen 8.0 bis 9.5 umschlossen wird - angeordnete Auswerteeinheit 10 bildet aus der Magnetfeldverteilung die absolute Position. Hierzu ist ein Speicher vorgesehen, in dem die Zuordnung von Sensorelement 8.0 bis 9.5 zum Winkelwert abgespeichert ist. Wird beispielsweise festgestellt, daß die Sensorelemente 8.1, 8.2 im Bereich des maximalen Magnetfeldes liegen, wird ein Winkelwert von 20° ausgegeben. Zur Bestimmung des Ortes des momentan maximalen Magnetfeldes kann auch zwischen zwei Sensorelementen interpoliert werden. Bei der Auswertung der momentanen Magnetfeldlage können die Sensorelemente 8.1, 8.2 ermittelt werden, welche maximale Signale abgeben oder es kann auch eine Position ermittelt werden, an der ein Übergang von maximalen zu minimalen Signalen vorhanden ist, im Beispiel wären dies die Sensorelemente 9.3, 9.4.

In Figur 5 ist eine weitere Variante dargestellt. Im Unterschied zu Figur 4 sind die Sensorelemente 8.0 bis 9.5 unterhalb des Magneten 5 angeordnet. Das wirksame Magnetfeld liegt im Bereich der Trennlinie von Nord- und Südpol.

Die Sensorelemente 8, 9 mehrerer Abtasteinrichtungen 7 des Multiturn-Teils können auch in einem gemeinsamen Substrat 7.13 integriert sein. Beispiele hierzu sind in den Figuren 6 bis 8 dargestellt.

Die Codeträger 5.1, 5.2, die gemäß Figur 1 jeweils über ein Untersetzungsgetriebe 6, 11 angetrieben werden, liegen gemäß Figur 6 in einer gemeinsamen Ebene. Die Abtasteinrichtungen 7.1 und 7.2 sind in einem gemeinsamen Substrat 7.13 integriert. Hierzu ist im Substrat 7.13 ein zweidimensionales Sensorarray aus magnetfeldempfindlichen Sensorelementen 8, 9 ausgebildet. Im Beispiel besteht das Array aus vier Zeilen und acht Spalten von Einzelelementen. Aus Gründen der Übersichtlichkeit sind nur zwei der Elemente 8, 9 mit einem Bezugszeichen versehen. Die absolute Drehstellung jedes Magneten 5.1, 5.2 kann wie zu Figur 2 bis 5 beschrieben bestimmt werden. Alternativ dazu besteht die Möglichkeit, die absolute Position aus der augenblicklichen Magnetfeldverteilung beider Codeträger 5.1, 5.2 auf dem Sensorarray 7.13 durch logische Auswertung gemeinsam zu bestimmen.

Die untersetzte Bewegungsübertragung zwischen den beiden Codeträgern 5.1, 5.2 ist nicht auf eine rotatorische Bewegung beschränkt.

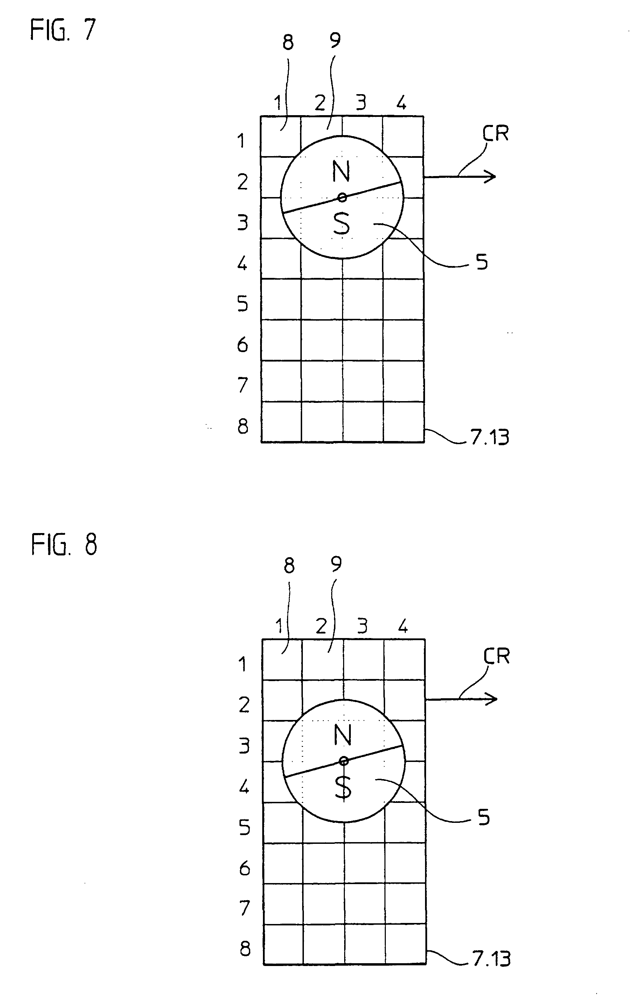

Die in Figur 1 dargestellten Untersetzungsgetriebe 6, 11 können auch als gemeinsames Untersetzungsgetriebe zusammengefaßt werden, so daß der Codeträger 5 nicht nur eine Drehbewegung um eine Drehachse D, sondern eine weitere der Drehbewegung überlagerte Verschiebebewegung oder weitere Drehbewegung relativ zum Sensorarray 7.13 ausführt. Dieses Beispiel ist schematisch in Figur 7 und Figur 8 dargestellt. Nach einer Umdrehung des Codeträgers 5 verschiebt sich der Codeträger 5 von der in Figur 7 dargestellten Position in die in Figur 8 dargestellte Position. Die überlagerte Bewegung simuliert das zweite Untersetzungsgetriebe 11, sie kann linear, rotatorisch oder spiralförmig sein. Die überlagerte Bewegung kann kontinuierlich erfolgen, oder schrittweise.

Bei den Beispielen gemäß der Figuren 4 bis 8 wird die Codeteilung von der räumlichen Verteilung der Sensorelemente gebildet. Die örtliche Verteilung der Sensorelemente dient als Lageinformation des Magnetkörpers. Jedem Sensorelement ist hierbei eine Adresse zugeordnet, welche die Lageinformation des Sensorelementes gegenüber den weiteren Sensorelementen und somit die örtliche Verteilung auf dem Halbleitersubstrat definiert.

Im Halbleitersubstrat 7, 7.4, 7.13 können auch Schnittstellenkomponenten und Ausgangstreiber integriert sein.

Die Zeichnungen sind Prinzipdarstellungen und nicht maßstäblich ausgeführt. Die Fläche eines Sensorelementes beträgt tatsächlich etwa 0,2 mal 0,4 mm.

Anstelle von Hall-Sensoren können auch andere magnetfeldempfindliche Sensorelemente, wie beispielsweise magnetoresistive Elemente oder Fluxgates eingesetzt werden.

## Patentansprüche

1. Multiturn-Codedrehgeber mit
- einem ersten Codeträger (1), der mit einer Eingangswelle (2) verbunden ist und zur Erzeugung der absoluten Position innerhalb einer Umdrehung von einer Abtasteinrichtung (4) abgetastet wird,
- zumindest einem weiteren Codeträger (5) zur Messung der Anzahl der Umdrehungen der Eingangswelle (2), wobei zwischen dem ersten Codeträger (1) und dem weiteren Codeträger (5) ein Untersetzungsgetriebe (6, 11) angeordnet ist, und
- der weitere Codeträger (5) ein Magnetkörper mit zumindest einem Nord- und Südpol ist, **dadurch gekennzeichnet dass**
- an Ausgang der Abtasteinrichtung (4) ein mehrstelliger Codewort (C1) ansteht,
- dem Magnetkörper (5) ein Halbleitersubstrat (7) mit einer darin integrierten räumlichen Anordnung von mehreren magnetfeldempfindlichen Sensorelementen (8, 9) zugeordnet ist, und daß
- in dem Halbleitersubstrat (7) eine Auswerteschaltung (10) integriert ist, der gegeneinander phasenverschobene Abtastsignale der Sensorelemente (8, 9) zugeführt werden, und daß die Auswerteschaltung (10) die Abtastsignale derart kombiniert, daß am Ausgang seriell oder parallel ein digitales Codewort (C2, C3) mit mehreren Bits ansteht,
- einer Kombinationslogik (14), welcher die Codeworte (C1, C2, C3) zugeführt werden und die daraus ein resultierendes mehrstelliges Codewort (CR) bildet.

2. Multiturn-Codedrehgeber nach Anspruch 1, **dadurch gekennzeichnet, daß** der weitere Codeträger (5) ein Magnetkörper mit nur einem einzigen Nord- und Südpol (N, S) ist, so daß jedes Sensorelement (8, 9) pro Umdrehung des Magnetkörpers (5) ein periodisches sinusförmiges Abtastsignal erzeugt.

3. Multiturn-Codedrehgeber nach Anspruch 1 oder 2, **dadurch gekennzeichnet, daß** mehrere Codeträger (5.1, 5.2) von der Eingangswelle (2) mit unterschiedlichen Untersetzungen angetrieben werden und jeder Codeträger (5.1, 5.2) von einem Halbleitersubstrat (7.1, 7.2) abgetastet wird, wobei die Halbleitersubstrate (7.1, 7.2) gleichartig aufgebaut sind.

4. Multiturn-Codedrehgeber nach einem der vorhergehenden Ansprüche, **dadurch gekennzeichnet, daß** die Sensorelemente Hall-Elemente (8, 9, 8.0 bis 9.5) sind und eine Array-Anordnung mit n Sensorelementen bilden, mit n größer oder gleich vier.

5. Multiturn-Codedrehgeber nach einem der vorhergehenden Ansprüche 1 bis 4, **dadurch gekennzeichnet, daß** mehrere weitere Codeträger (5.1, 5.2) vorgesehen sind, und daß jeder Codeträger (5.1, 5.2) ein Magnetkörper mit einem einzigen Nord- und Südpol ist, und daß die Sensorelemente (8, 9) zur Abtastung mehrerer Codeträger (5.1, 5.2) in einem gemeinsamen Halbleitersubstrat (7.13) integriert sind.

6. Multiturn-Codedrehgeber nach einem der vorhergehenden Ansprüche 1 bis 4, **dadurch gekennzeichnet, daß** das Untersetzungsgetriebe zwischen der Eingangswelle (2) und dem weiteren Codeträger (5) eine Verdrehung des Codeträgers (5) sowie eine der Verdrehung überlagerte Verschiebung verursacht, und daß die Sensorelemente (8, 9) zweidimensional in Verdrehrichtung sowie Verschieberichtung nebeneinander in einem Halbleitersubstrat (7.13) integriert sind.

## Claims

1. Multiturn rotary encoder having
- a first code carrier (1) which is connected to an input shaft (2) and is scanned by a scanning device (4) to generate the absolute position within one revolution,
- at least one further code carrier (5) to measure the number of revolutions of the input shaft (2), reduction gearing (6,11) being disposed between the first code carrier (1) and the additional code carrier (5), and
- the additional code carrier (5) being a magnetic body having at least a north and south pole, **characterised in that**
- there is a multidigit code word (C1) at the exit of the scanning device (4),
- with the magnetic body (5) is associated a semiconductor substrate (7) having an integral spatial arrangement of a plurality of sensor elements (8,9) which are sensitive to a magnetic field, and **in that**
- there is integrated into the semiconductor substrate (7) an evaluation circuit (10), to which scanning signals, phase-shifted in respect of one another, of the sensor elements (8,9) are supplied, and **in that** the evaluation circuit (10) combines the scanning signals in such a way that a digital code word (C2, C3) with a plurality of bits is present serially or in parallel at the output,
- a combinatorial logic device (14) to which the code words (C1,C2,C3) are supplied and which forms a resulting multidigit code word (CR) therefrom.

2. Multiturn rotary encoder according to claim 1, **characterised in that** the additional code carrier (5) is a magnetic body with only a single north and south pole (N,S), such that each sensor element (8,9) generates a periodic sinusoidal scanning signal per revolution of the magnetic body (5).

3. Multiturn rotary encoder according to claim 1 or 2, **characterised in that** a plurality of code carriers (5.1,5.2) are driven by the input shaft (2) with different reduction ratios and each code carrier (5.1, 5.2) is scanned by a semiconductor substrate (7.1,7.2), the semiconductor substrates (7.1,7.2) being constructed in the same manner.

4. Multiturn rotary encoder according to one of the preceding claims, **characterised in that** the sensor elements are Hall elements (8,9,8.0 to 9.5) and form an array arrangement having n sensor elements, with n being greater than or equal to four.

5. Multiturn rotary encoder according to one of the preceding claims 1 to 4, **characterised in that** a plurality of additional code carriers (5.1, 5.2) are provided, and **in that** each code carrier (5.1,5.2) is a magnetic body with a single north and south pole, and **in that** the sensor elements (8,9) for scanning a plurality of code carriers (5.1,5.2) are integrated in a common semiconductor substrate (7.13).

6. Multiturn rotary encoder according to one of the preceding claims 1 to 4, **characterised in that** the reduction gearing between the input shaft (2) and the additional code carrier (5) causes a twisting of the code carrier (5) and a displacement superimposed on the twisting, and **in that** the sensor elements (8,9) are integrated beside one another in a semiconductor substrate (7.13) in a two-dimensional manner in the direction of twisting and of displacement.

## Revendications

1. Codeur de rotation multi-tours comprenant
- un premier support de code (1) qui est lié à un arbre d'entrée (2) et est palpé par un dispositif de palpage (4) pour générer la position absolue à l'intérieur d'une révolution,
- au moins un support de code (5) supplémentaire pour mesurer le nombre de révolutions de l'arbre d'entrée (2), un mécanisme réducteur (6, 11) étant disposé entre le premier support de code (1) et le support de code (5) supplémentaire et dans lequel
- le support de code (5) supplémentaire est un corps magnétique avec au moins un pôle nord et un pôle sud,
**caractérisé**
- **en ce qu'**un mot-code (C1) à plusieurs positions est délivré à la sortie du dispositif de palpage (4),
- **en ce qu'**un un substrat semi-conducteur (7) avec un système intégré de plusieurs palpeurs élémentaires (8, 9) sensibles au champ magnétique est associé au corps magnétique (5),
- **en ce qu'**un circuit de traitement (10) auquel sont transmis des signaux de palpage mutuellement déphasés des palpeurs élémentaires (8, 9) est intégré dans le substrat semi-conducteur (7) et que le circuit de traitement (10) combine les signaux de palpage de manière à obtenir au niveau de la sortie, série ou parallèle, un mot-code (C2, C3) numérique à plusieurs bits et
- **en ce que** les mots-codes (C1, C2, C3) sont transmis à un circuit logique de combinaison (14) qui produit à partir de ceux-ci un mot-code (CR) résultant à plusieurs positions.

2. Codeur de rotation multi-tours selon la revendication 1, **caractérisé en ce que** le support de code (5) supplémentaire est un corps magnétique avec seulement un pôle nord et un pôle sud (N, S), de sorte que chaque palpeur élémentaire (8, 9) produit un signal de palpage périodique sinusoïdal à chaque révolution du corps magnétique (5).

3. Codeur de rotation multi-tours selon la revendication 1 ou 2, **caractérisé en ce que** plusieurs supports de code (5.1, 5.2) sont entraînés par l'arbre d'entrée (2) avec des démultiplications différentes et que chaque support de code (5.1, 5.2) est palpé par un substrat semi-conducteur (7.1, 7.2), les substrats semi-conducteurs (7.1, 7.2) présentant la même structure.

4. Codeur de rotation multi-tours selon une des revendications précédentes, **caractérisé en ce que** les palpeurs élémentaires sont des éléments de Hall (8, 9, 8.0 à 9.5) et forment une structure en réseau à n palpeurs élémentaires, avec n supérieur ou égal à quatre.

5. Codeur de rotation multi-tours selon une des revendications 1 à 4 précédentes, **caractérisé en ce qu'**il est prévu plusieurs supports de code (5.1, 5.2) supplémentaires, **en ce que** chaque support de code (5.1, 5.2) est un corps magnétique avec seulement un pôle nord et un pôle sud et **en ce que** les palpeurs élémentaires (8, 9), pour le palpage de plusieurs supports de code (5.1, 5.2), sont intégrés dans un substrat semi-conducteur (7.13) commun.

6. Codeur de rotation multi-tours selon une des revendications 1 à 4 précédentes, **caractérisé en ce que** le mécanisme réducteur entre l'arbre d'entrée (2) et le support de code (5) supplémentaire assure la rotation du support de code (5) ainsi qu'une translation superposée à la rotation et **en ce que** les palpeurs élémentaires (8, 9) sont intégrés l'un à côté de l'autre, de manière bi-dimensionnelle, dans la direction de rotation et dans la direction de translation, dans un substrat semi-conducteur (7.13).
